# EUROPEAN PATENT APPLICATION

(11) **EP 3 287 912 A1**
(43) Date of publication of application: **28.02.2018**
(21) Application number: 17177682.6
(22) Date of filing: 23.06.2017
(51) Int. Cl.: G06F 17/30

(54) **METHOD FOR CREATING LOCATION-BASED SPACE OBJECT, METHOD FOR DISPLAYING SPACE OBJECT, AND APPLICATION SYSTEM THEREOF**

(30) Priority: 24.08.2016 TW 105127122
(71) Applicant: Li, Yu-Hsien, Taipei City 116 (TW)
(72) Inventor: Li, Yu-Hsien, Taipei City 116 (TW)
(74) Representative: DTS Patent- und Rechtsanwälte Schnekenbühl und Partner mbB

(57) **Abstract**

The disclosure is related to a method for creating location-based space object data, a method for displaying space object (103), and a system thereof. A cloud-based server (41) is to receive a space object (103) created by a user using a mobile device (400). The system simultaneously receives information related to a location of the space object (103). The location is indicative of ground-position data, space-angle data, or additional information related to the object's background image. When the system receives this space information, a viewable range with respect to every space object (103) is defined. A searchable database is established when the system has collected sufficient space objects and information. A user is able to use a mobile device (400) to search for the space object (103) by utilizing the cloud-based server (41) that receives space information and compares it with the database. The mobile device (400) can display the corresponding space object (103) after a search result is obtained.

## Description

### BACKGROUND OF THE INVENTION

### 1. Field of the Invention

The present invention is related to technique for creating a space object and displaying the space object, in particular to a method and a system provided for a user using a mobile device to create a location-based space object in a three-dimensional real space, and to display the space object.

### 2. Description of Related Art

According to a conventional application, a user utilizes a mobile device to execute a proprietary application, e.g. an APP, for activating a camera module. The camera module is driven to capture a real scene and the real scene is displayed on a screen of the mobile device. The application enables an augmented reality technology that allows an image object to be shown over the real scene.

In general, the augmented reality technology requires a software routine to recognize a marker within the real scene through the camera module of the mobile device. The marker is referred to in order to initiate the image object. The augmented reality technology uses a well-defined correlation between the marker and the image object to show the image object in the software routine.

Another conventional augmented reality technology relies on location-based information to initiate the image object. This means the image object defined in the software is initiated based on a location of the mobile device. A user manipulates the mobile device to find out and display the image object based on its location, that is rendered by a global positioning signal generated by a GPS module installed in the mobile device. In the meantime, an azimuth angle signal can be generated by a gyroscope of the mobile device for positioning an elevation angle of the mobile device. This positioning information acts as reference provided for a server that directs the software program in the mobile device to show the image object.

These mentioned technologies of augmented reality or location-based method merely create a circumstance that allows the user to experience reality and facilitate recreation.

### SUMMARY OF THE INVENTION

The disclosure of the present invention is related to a method for creating a location-based space object, a method for displaying the space object, and an application system thereof. The application system directs a user to download a software program using a mobile device. After the software program is executed in the mobile device, the mobile device can optionally enter a data establishment mode or a search and display mode.

Under the data establishment mode, the system allows every mobile device handheld by a user to execute a software program to create a space object in a real scene. While the system has collects the space object created by every mobile device that executes the proprietary software program, the system builds up a search engine for searching for the space object at a related real scene based on the mobile device's positioning information. Thus, under the search and display mode, the system allows the user using a mobile device to search for the space object after a system-end server receives the mobile device's positioning information optionally including image data of the real scene. Therefore, the system achieves the objective to search and to display the space object in the real scene.

According to one of the embodiments of the present invention, in the method for creating a location-based space object, under a data establishment mode a software program executed in the mobile device acquires a signal for selecting a space object, receives a signal for selecting a real scene, generating space information related to the space object, and then uploading the data of the space object and space information related to the space object to a server. A database provided for searching for the space object is therefore established in the server. It is noted that the space object can be a text, a picture, a video, or a sound, or a combination thereof.

In one embodiment, the space information with respect to the space object includes a ground-position data, a space-angle data, and an image data of a real scene related to the mobile device. In an example, the ground-position data is generated by a ground-positioning unit, and the space-angle data is generated by a space-positioning unit when a user manipulates the mobile device. The image data of the real scene indicates a color block data and a line data after the real scene undergoes a process of image processing. The mentioned positioning information and the image data act as a basis for positioning the space object.

In one further embodiment, the method for displaying the location-based space object includes under a search and display mode the software program executed in the mobile device receiving signals of a real scene image captured by the mobile device. The mobile device then generates the space information related to this real scene. The space information indicates a ground-position data and a space-angle data. The space information is uploaded to a server. After an operation procedure is performed in the server for comparing with a database, a search result related to the space information is generated and transmitted to the mobile device. The mobile device displays the space object shown in the search result.

When the space object corresponding to the space information has been found, the space object is displayed on a screen of the mobile device when the screen displays the real scene. The space object is overlapped with the real scene at a location associated with the space object. The objective to search for the space object in the real scene has been achieved.

In one further aspect of the present invention, an application system is provided. The application system includes a cloud-based server and a database. The system also includes an instruction set stored in a computer-readable storage installed in a mobile device. The instruction set executed by a processor of the mobile device is able to perform a process of searching and displaying the location-based space object.

The instruction set executed in the mobile device for performing the method includes instruction for capturing an image that is used to obtain an image of a real scene, and displaying the real scene in the mobile device; instruction for processing a space object in the mobile device that is used to process the space object associated to the real scene; instruction for forming data of the space object uploaded to the server; instruction for generating positioning information that is used to obtain the positioning information generated by a ground-positioning unit and a space-positioning unit of the mobile device; instruction for generating image data that is used to process the real scene data for generating the image data with respect to the space object; instruction for searching the space object that is used to acquire positioning information and the image data under a search and display mode, upload the space information to the server, and receive a search result from the server; instruction for transmitting and receiving that is used to establish a connection between the mobile device and the server; and instruction for displaying the space object that is used to display the space object according to the search result.

### BRIEF DESCRIPTION OF THE DRAWINGS

Fig. 1A through 1C shows a schematic diagram describing a circumstance of a user manipulating a mobile device to create a location-based space object in one embodiment of the present invention;
Fig. 2A shows a schematic diagram depicting coordinates indicating a space-angle data;
Fig. 2B shows a schematic diagram retrieving image information related to a background of the space object;
Fig. 3 schematically shows a system network framework of the system for creating and display the location-based space object in one embodiment of the present invention;
Fig. 4 shows a schematic diagram describing software modules of a mobile device of the application system according to one embodiment of the present invention;
Fig. 5 shows a flow chart depicting the method for creating the location-based space object according to one embodiment of the present invention;
Fig. 6 shows another flow chart depicting the process of establishing a database by the application system in one embodiment of the present invention;
Fig. 7 shows a flow chart for displaying the location-based space object in one embodiment of the present invention;
Fig. 8 shows a schematic diagram depicting the application system rendering a search result according to one embodiment of the present invention.

### DETAILED DESCRIPTION OF THE PREFERRED EMBODIMENTS

The present invention now will be described more fully hereinafter with reference to the accompanying drawings, in which preferred embodiments of the invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art.

The disclosure in accordance with the present invention is related to a method for creating a location-based space object, a method for displaying the space object and an application system. The application system includes a cloud-based system, and a proprietary software program installed in a user-end mobile device. The cloud-based system has a server and a database. The server may be served by a plurality of hosts. The server provides a user management interface that allows a user to utilize his mobile device to upload information, such as the mobile device's location and its space information, and optionally image information related to a background. The uploaded data allows the application system to establish a database providing a searching service when it records the data of a plurality of location-based space objects uploaded by the plurality of users. A search engine is therefore constituted. The search engine provides for the user to search for the space object based on geographic and space information.

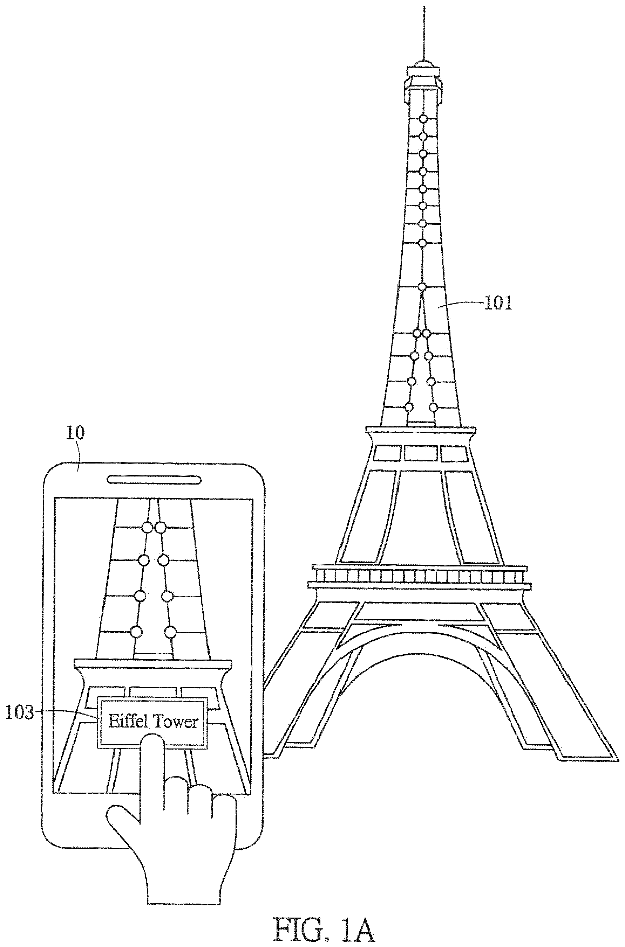

Several schematic diagrams illustrating circumstances describing the method for creating a location-based space object using a mobile device are shown in Fig. 1A through Fig. 1C.

As Fig. 1A shows, a user utilizes a mobile device 10 to install a software program provided by an application system. The software program is such as an APP installed in an intelligent device. When the software program is initiated, the operation is under a data establishment mode. A camera module of the mobile device 10 is activated. Through the user's manipulation, the mobile device 10 is directed to a target to be annotated. The target is such as a building, a shop, a landscape, or an article. Through a screen of the mobile device 10, the user can see a real scene 101 related to the target. After that, an Augmented Reality (AR) technology can be applied. The user can utilize a touch-sensitive display of the mobile device 10, or other input method to add a new message onto a region of the real scene 101. The message can be a text, a picture, a video or a sound, or a combination thereof.

This example shows the user stands up in front of a famous attraction, e.g. the Eiffel Tower. The user manipulates the mobile device 10 to direct toward the real scene 101, and annotates a note such as its title 'Eiffel Tower.' This annotation is a space object 103 defined by the application system of the present invention.

After that, the user is required to confirm the space object 103, e.g. the annotation, accompanied with its corresponding space information over the real scene 101. The software program executed by the mobile device 10 transmits the data of the space object 103 and its corresponding space information to a server or a host of the application system. The space object 103 can be any type or any combination of a text, a picture, a video, and a sound. The mentioned space information includes a ground-position data, a space-angle data, and image information of the real scene 101 when the space object 103 has been created. The space angle can be a combination of an azimuth angle and an elevation angle.

Under a search and display mode, the image information of the real scene 101 indicates the information of color blocks and the lines between the adjacent color blocks with respect to the Eiffel Tower behind the space object 103. The ground-position data, the space-angle data, the color block data, and the line data form the parameters for searching the space object 103. These data are stored in the cloud-based server of the application system.

When the user manipulates the mobile device 10 to generate and upload the space information, the cloud-based server gets the space object 103 through a comparison operation. In general, the ground-position data and the space-angle data are the requisite factors provided for the cloud-based server to find out the space object 103. If it is necessary, the server goes on the comparison using the color block data and/or line data transmitted by the mobile device 10; or conducts the comparison using the line data, or adding the color block data when the space object 103 cannot be identified through the line data. In consequence of the process, a search result is transmitted to the mobile device 10.

Further, the mobile device 10 displays the space object 103 through an interface initiated by the software program. A link icon can be used to link to further information. The space object 103 in itself can also be a link button provided for the user to click for having more information about the space object 103. Further information related to the space object can be provided by the system; or the information accompanied with the space object can be added when the space object has been created. In an exemplary example, when the space object indicates a link of a scenic spot, its introduction, traffic information, and nearby information can be obtained when the link is clicked. When the space object indicates a store, further information such as the store's contact information and discount program is provided to be reference for the user.

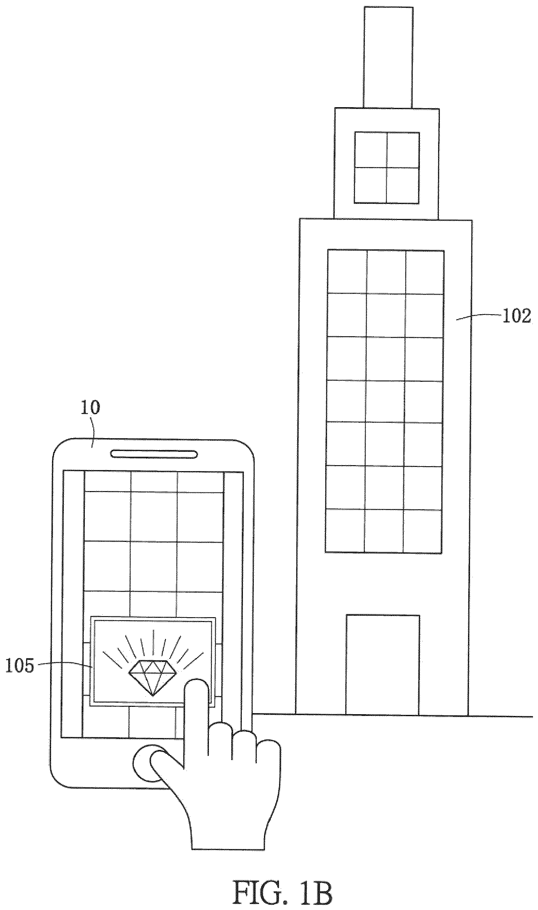

Fig. 1B shows another diagram illustrating a circumstance for creating the location-based space object in one embodiment of the present invention. The user operates the mobile device 10 to initiate the software program. Under a data establishment mode, the camera module is activated. When the mobile device 10 is facing toward a scene 102, exemplarily a building, the system allows a space object 105 to be overlapped over several floors of the building precisely by an AR technology. The space object 105 is a picture in this example, and the picture conveys the information related to the floors covered or about this scene 102.

For example, if a company is located at the floors directed at by the mobile deice 10, the space object 105 can be the text, video, and/or picture introducing the company, or even the company's product advertisement or recruitment information. When the company annotates this space object 105, the space information related to this space object 105 is transmitted to the server. The space information not only includes the image data of the space object 105, but also the ground-positon data and the space-angle data of the mobile device 10, and the image information of the real scene 102 when the space object 105 has been made. The image information of the scene 102 indicates the color block data and line data between the color blocks of background of the space object 105 when the space object 105 has been made.

When the space information with respect to the space object 105 has been established, the ground-position data, the space-angle data and the image information for the space object 105 are transmitted to the application system, and act as the parameters stored to a database for searching for the space object 105 in the future.

Further, to create the space object 105, the user can render it with more functions such as defining a URL link to the space object 105 that allows others to get more information when space object 105 is searched for. The URL may direct to a webpage rendering an interface allowing the user to get more interactive services such as conducting a video conference, a message conversation or online shopping.

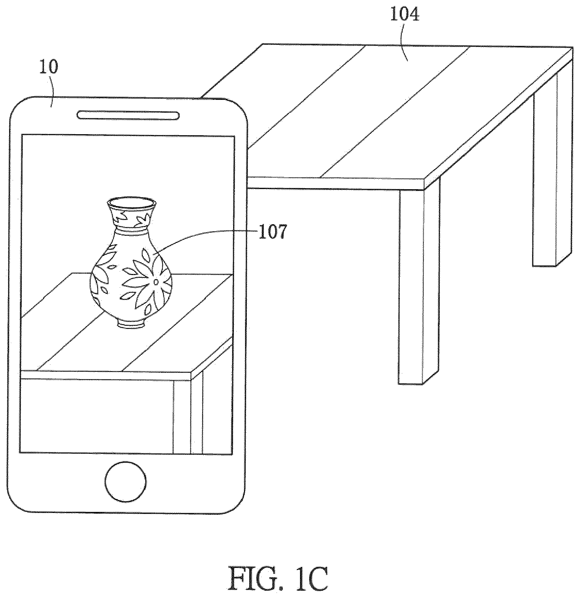

Fig. 1C schematically shows a circumstance depicting one of the embodiments of the present invention.

In the diagram, an indoor table is shown in a real scene 104. A mobile device 10 is utilized to capture an image of the real scene 104. Via a program interface, a space object 107 is selected and overlapped to the real scene 104. The example shows a vase is added on the table. Some other types of messages such as a text, a video or a picture, or a combination thereof also act as the space object. Similarly, the software program executed in the mobile device 10 transmits the space information with respect to this space object 107 to the server when the user has confirmed the position of the space object 107. The space information exemplarily includes the image of the space object 107, and its corresponding ground-position data, space-angle data, and the image information of the real scene 104.

It is worth noting that the mobile device 10 may not easily get the GPS signal if it meets an indoor real scene 104, In exemplary example, the proprietary software program of the mobile device 10 can adopt the latest positioning information from the GPS module of the mobile device 10. The latest positioning information helps the application system to estimate the position of the mobile device 10. For example, the mobile device 10's latest positioning information helps the software program to locate the mobile device 10 if it is in a building or any range where the device cannot receive the GPS signal. However, even though the software program can estimate the position of the mobile device 10, the program cannot accurately locate the mobile device to find any space object. For achieving accurate positioning technique, the software program in accordance with the present invention further uses image information with respect to the real scene where the camera module of the mobile device 10 takes a view to be a reference for positioning. In one embodiment of the present invention, the image information can be color block data and/or line data associated with the real scene where the space object is positioned.

According to one of the embodiments, the real scene is usually a background image with respect to an added space object. Reference is made to Fig. 1C. A software program executed in the mobile device 10 processes the image of a table surface so as to form a color block data and a line data. The powerful cloud-based server may directly recognize the image and the image information that is used to precisely locate the space object. Preferably, the image information with respect to the image of the table surface can be simplified to a digital form that is easily stored and used. No matter how much power capability of computation the server owns, rather than using the image recognition applied to the image, the pre-processing step allows the system to utilize the digital message of the image of the real scene in order to provide a fast searching service. The digital message of the image of the real scene provides sufficient information to expedite the searching service for accurately searching for the corresponding space object.

That means, at the server end, an operation procedure is performed to locate the space object according to the ground-position data and space-angle data. In an exemplary example, a Global Positioning System (GPS) installed in the mobile device is used to acquire the ground-position data; and a Gyroscope in the mobile device is utilized to obtain the space-angle data such as a combination of an azimuthal angle and an elevation angle of the mobile device. More, under the search and display mode, the server will consider the image information such as the color block data relating to the real scene if the ground-position data and the space-angle data fail to accurately locate the space object. Still further, the server may use the line data to assist the searching process if the color block data is insufficient to locate any space object. The application system consequently provides a search result including at least one matched space object, or providing an option menu.

The ground-position data is generally read out from a positioning circuit, e.g. a GPS module, in the mobile device. The positioning data can also be obtained from other auxiliary positioning signals such as the signals from mobile stations or a wireless local area network. In an example, when the mobile device is located at a place where it cannot receive GPS signals, the application system regards the latest received positioning signals as the ground-position data other than incorporating the auxiliary positioning signals. Next, the application system receives the signals generated by a space-positioning circuit, e.g. a gyroscope, in the mobile device, and the signals form the space-angle data.

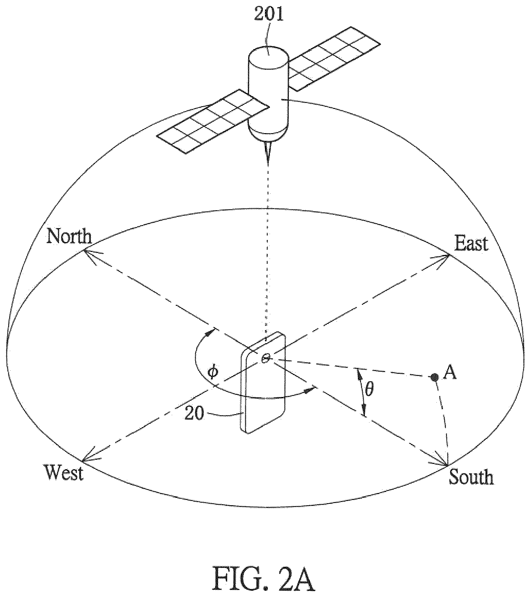

The schematic diagram shown in Fig. 2A depicts the formation of the space-angle data. A spatial coordinate system can be exemplarily defined by a pair of an azimuth angle ϕ and an elevation angle θ. The azimuth angle ϕ is especially an angular measure of a spherical coordinate system. In one of aspects of the present invention, the mobile device 20 renders the spatial coordinate system. An origin of the spatial coordinate system indicates a position where the mobile device 20 held by the user, e.g. an observer, is located. The horizontal plane develops the spherical coordinates for defining the azimuth angle ϕ ranging from 0-degree angle (direction of North), 90-degree angle (direction of East), 180-degree angle (direction of South), 270-degree angle (direction of West), and to 360-degree angle (back to direction of North). The azimuth angle can be described based on a reference axis, e.g. the North axis, for defining an azimuthal direction of the mobile device 20. For example, the direction A that a rear camera of the mobile device 20 points toward indicates the azimuthal direction. This direction A constitutes the azimuth angle ϕ and the elevation angle θ. Both the azimuth angle ϕ and the elevation angle θ can be determined by a space-positioning unit in the mobile device 20. A combination of the azimuth angle ϕ and the elevation angle θ forms the space-angle data for this direction A. When this space-angle data is combined with the ground-position data generated in the mobile device 20 through the positioning satellite 201, the mobile device 20 can be positioned by its position and pointing direction. A kind of space information is therefore formed. The space information is provided to the application system for obtaining a space object that is displayed on the mobile device 20 through an operation procedure.

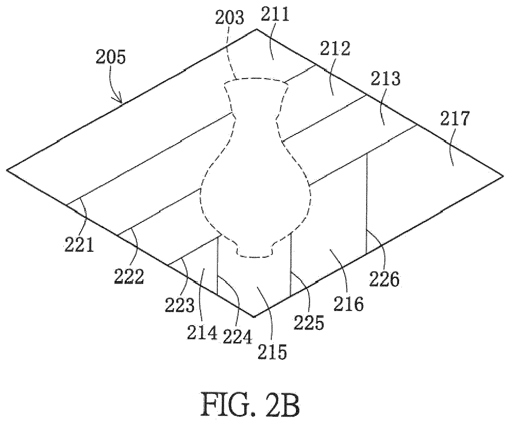

Fig. 2B shows a schematic diagram depicting a technique to obtain the image information with respect to a space object. A space object 203 indicated by a dotted-line frame in the diagram is positioned over a background image 205. When the space object 203 has been created, the server acquires information relating to the space object 203 from the mobile device at the user end. The information relating to the space object 203 includes an image of the space object 203, and its positioning information such as a ground-position data and a space-angle data. The image information of the background image 205 can also be acquired by the server. The positioning information, optionally with the image information of the background image 205, constitutes the parameters of space information for locating the space object 203. Further, more information can be annotated to the space object 203. For example, a hyperlink can be annotated to the space object 203 that allows a user to get further information when he has searched this space object 203. The hyperlink is clickable to link a webpage or a shopping interface for further interaction.

The image information of the background image 205 can be composed of a color block data and a line data through an image processing process. In one embodiment, the image processing process can be performed using a software program executed in the mobile device, or in the cloud-based server. The image processing process extracts the characteristics such as the color blocks and the lines there-between from the background image 205. Both the color blocks and the lines act as the parameters for locating the space object.

In an exemplary example, the pre-processing method first sketches the background image 205, for example, using the lines 221, 222, 223, 224, 225, and 226. The blocks 211, 212, 213, 214, 215, 216, and 217 are formed by the lines 221, 222, 223, 224, 225, and 226. After that, an average of the pixel values in every block can be computed. The average denotes a color block data with respect to every block. In one further embodiment, a normalization method can be performed onto the pixels of every block so as to compute every block's characteristic value. The characteristic value is regarded as the block's color block data. It is noted that the image pre-processing method is not limited to the above disclosure. The image under the pre-processing method is not limited to be within any specific chromatic space, but it can be within an RGB space, a HSV (Hue, Saturation, and Value) space, or a CMYK (Cyan, Magenta, Yellow, and Black).

It is worth noting that, the information relating to the lines 221, 222, 223, 224, 225, and 226 for the background image 205 conveys a line data that acts as the reference for displaying the space object 203. Through the image processing process, the space object 203 can be positioned on the plane just as it should be placed.

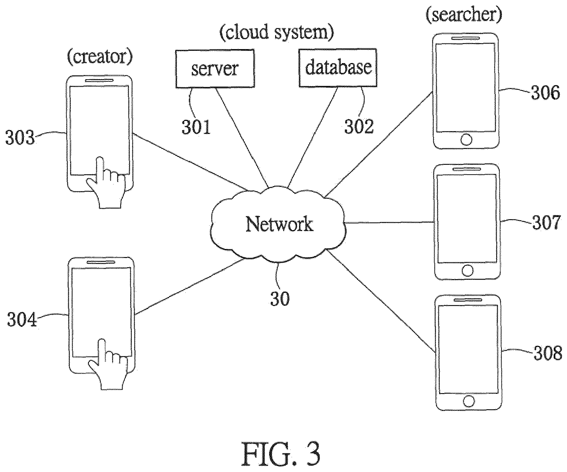

Reference is made to Fig. 3 depicting a framework of a network system for implementing the system for creating and displaying the location-based space object according to one embodiment of the present invention.

The system for creating the location-based space object and providing a search service thereof is built over a network. At the server end of the system, a server 301 and a database 302 are provided for forming a cloud-based system. The database 302 records a plurality of space objects and their corresponding space information. The database 302 can be based on the space objects and the related space information uploaded by the users using their mobile devices. The database 302 can also be built by the system administrators. The database 302 acts as the source for the searchable objects.

According to one of the embodiments, the database 302 can be functionally separated into a space object database for recording the data of space objects, and a search database for recording the space information with respect to the space objects and the searching criteria with respect to every space object.

The server 301 is provided for processing data transmitted from the user-end mobile devices. The data made by the user-end mobile devices are such as the parameters for searching the space objects. The server 301 compares data in the database 302 with the data received from the mobile devices. The system renders a searchable service over the network 30, and a search result is created for every request of searching. The data in the cloud-based database 302 is mainly based on the user-created space objects. A software interface can be provided for the user to search the space objects recorded in the database 302.

The end-users are such as the shown creator devices 303 and 304. The user manipulates his mobile device, especially through a touch-sensitive display of the mobile device, by his gesture or other input methods to decide a scene for placing a space object. The space object can be a text, a picture, a video, or an audio, or any combination thereof. The scene where the space object is placed is preferably a real scene in reality. The combination of the space object and the scene form the space information for locating the space object. The space information includes a ground-position data and a space-angle data for locating the space object. The image information extracted from the real scene acts as the positioning information for positioning the space object. The image information is such as a series of color block data and line data resolved from the real image through the image processing method.

When the space objects and their space information have been created in the creator devices 303 and 304, the data is transmitted to the server 301 over the network 30. The data will be saved to the database 302. The system accordingly provides the searchable service over the network 30 for the searcher devices 306, 307 and 308 to search space objects in the search database 302. For an example, a software program is initiated in the mobile device, and the software program acquires positioning information such as the ground-position data and the space-angle data generated by the positioning circuits of the mobile device. The information is transmitted to the server 301. The searcher devices 306, 307 and 308 can obtain the search results when the server 301 conducts a comparison using the database 302. The search result lists one or more space objects based on the searching request using the ground-position data and the space-angle data. The space object in the search result can be displayed on the display of the mobile device.

If the ground-position data and the space-angle data received by the server 301 are inaccurate or insufficient to locate any space object, the image information related to the real scene with respect to the space object can be auxiliarily considered to conduct the search, in which, the color block data and/or the line data related to the real scene uploaded to the server 301 are also regarded as the parameters to conduct the search.

It is worth noting that the system can receive the space objects and the corresponding space information from the creator devices 303 and 304 through the software routines. The space information optionally including the ground-position data, space-angle data, color block data and line data can be configured to be the searching criteria. The searching criteria may also be made by the user's setting. The searching criteria may be formed according to the spatial relationship between the creator device 303 or 304 and the real scene. In an exemplary example, the searching criteria indicate any one or any combination of a time limit, a viewable range and a user range.

For example, the viewable range can be formed based on a difference between the location of the creator device 303 or 304 and the real scene with a set of global positioning coordinates when the creator device 303 or 304 has created the space object in the beginning. The viewable range indicates a distance or a region available for the user using his mobile device to see the space object. The system sets a distance threshold to define the viewable range between the searcher device 306, 307 or 308 and the real scene. Outside this distance threshold, the user cannot see the space object no matter where the user is at, whether too close or too far.

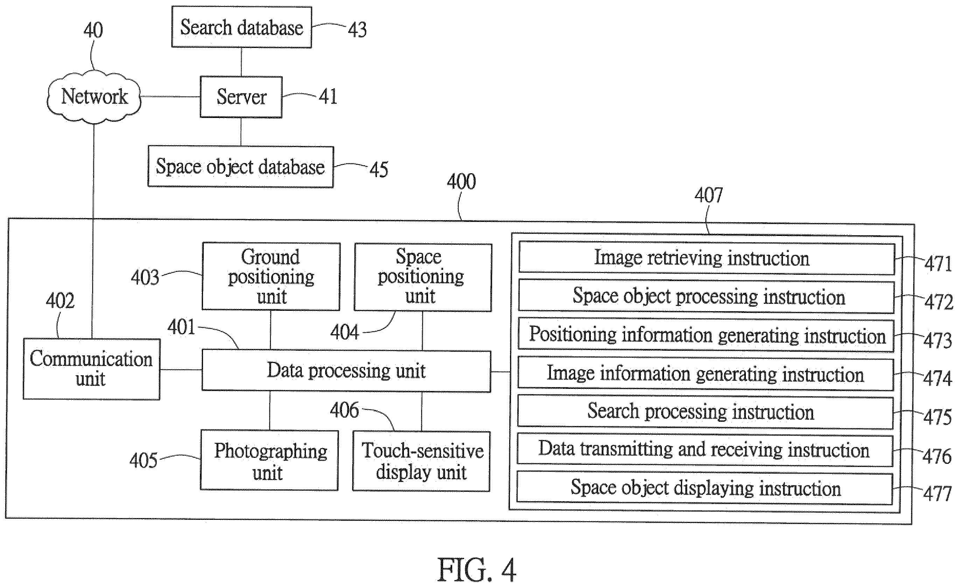

Fig. 4 shows a diagram depicting the software modules of the application system and the mobile device in one embodiment of the present invention.

The application system includes a cloud-based server 41. The server 41 is implemented by a computer system, or a cluster of multiple computer systems for operating various functions. The server 41 is mainly used to receive the data of a space object and corresponding space information uploaded by the user-end mobile device 400 so as to establish a database. Establishment of the database can be based on a search database 43 and a space object database 45. The database is used to record the data generated by the user-end mobile device.

The database is such as a data storage medium that can be separated to the search database 43 and the space object database 45. Both the databases 43 and 45 can be installed into one server, or different sites. The space object database 45 mainly records the data of the space object uploaded by the mobile device 400. The space object can be any type or any combination of a text, a picture, a video, and a sound. The video may comprehensively include a plane graphic animation or a 3D animation. The space object database 45 simultaneously acts as the source provided for the user to search for the space objects using the mobile device 400. The search database 43 mainly records further information relating to the space object uploaded by the mobile device 400. The information is such as the positioning information with respect to the space object, and/or including the color block data and line data corresponding to the scene where the space object is positioned. The color block data and the line data extracted from the real scene related to the space object act as the reference for locating the space object. The server 41 performs an operation procedure of comparison using the space information recorded in the search database 43. One or more space objects can be found in this preliminary procedure. Every space object has its identification that is delivered to the user-end device.

Furthermore, when the space information related to the space object is formed by the user operating the mobile device 400, the searching criteria is also generated. The searching criteria such as a time limit, a viewable range, and/or a user range are configured to be uploaded to the search database 43.

For example, a space object is established at a place correlated to a real scene, and a time limit can be set. The time limit acts as one of the searching criteria. The time limit restricts the user to merely searching for the space objects within a time period in which the seeable space objects also meet the other searching criteria, such as the conditions including the positioning information and image information. The viewable range confines a seeable distance from the real scene, a plane-position range and/or a space-angle range allowing the user to see the space object. The user cannot see the space object until the mobile device 400 held by the user moves within the viewable range.

Further, the user range allows the user to restrict who can see the space object. The number of the users who are allowed to see the space object is configurable, e.g. one or more people. Every user's identification (user ID) will be transmitted to the server 41 when the user operates the mobile device 400 to search for the space object. This user ID is one of the searching criteria.

The application system establishes the database, e.g. the search database 43 and the space object database 45, using a mass of data uploaded by a plurality of users. A search engine is therefore established, and renders a search service for the user operating the mobile device to search for the space objects.

The mobile device 400 is configured to operate the method for creating the location-based space object, and also for displaying the space object. The mobile device 400 connects to the server 41 over the network 40. The mobile device 400 includes the main circuit components such as a data processing unit 401 that is used to process the signals among the circuit components of the mobile device 400, and the other circuits electrically connected to the data processing unit 401. The mobile device 400 includes a communication unit 402 that is used to establish a connection to an external device. A ground-positioning unit 403 in the mobile device 400 is used to sense the position of the mobile device 400. A space-positioning unit 404 is used to sense the spatial position of the mobile device 400. A photographing unit 405 is for capturing the image of a real scene. A touch-sensitive display unit 406 allows the user to input commands using gestures.

The ground-positioning unit 403 can be implemented by the circuit component of a global positioning system that utilizes positioning signals received from a positioning satellite to generate ground-position data. The positioning scheme can be collaborated with the signals generated by other wireless base stations. The space-positioning unit 404 can be implemented by a gyroscope in the mobile device 400. The gyroscope is used to sense the spatial position of the mobile device 400 in a 3D space, so as to generate a space-angle data essentially constituted of an azimuth angle ϕ and an elevation angle θ.

The application system includes a memory unit 407 inside the mobile device 400. The memory unit 407 is such as a non-transitory computer-readable medium that is used to store an instruction set. The instruction set executed by one or more processors of the mobile device 400 is to perform the sequences for creating and displaying the location-based space object. The main sequences of the instruction set are as follows.

First, an instruction (471) is initiated to activate a photographing unit 405 of the mobile device 400 for capturing an image of a real scene. The real scene is displayed on the mobile device 400. An instruction (472) is used to process a space object created over the real scene by a user using a touch-sensitive display unit 406 of the mobile device 400. The space object can be positioned at front, rear, top, bottom, left or right side of the real scene. The space object can be freely created by the user, or selected from the space object database 45 of the system. The space object is transmitted to the server 41 in a form of any one or a combination of a text, a picture, a video, and a sound. An instruction (473) receives the signals made by a positioning circuit of the mobile device 400. For example, the signals are generated by a ground-positioning unit 403 and space-positioning unit 404 of the mobile device 400, and form the positioning information for locating the mobile device 400. An instruction (474) is initiated to process the image of the real scene. The image information of the real scene is such as a color block data and a line data that are used to locate the space object. An instruction (475) allows the server 41 to receive the positioning information and the image information generated by the mobile device 400 under a search and display mode and afterwards to produce a search result. An instruction (476) is initiated to establish a connection between the mobile device 400 and the server 41, and is used to transmit and receive signals over the connection. The instruction (476) is performed to transmit the positioning information, especially the image information, to the server 41, and receive the search result therefrom. An instruction (477) allows the mobile device 400 to display the space object according to the search result provided by the server 41. The space object displayed on the mobile device 400 can be overlapped to the real scene.

It is noted that the space object can be provided by a system that provides an image library, a video library, and/or a sound library; further, the system allows the user to create/upload the space object using some software tools; or the space object can be a picture photographed by the user.

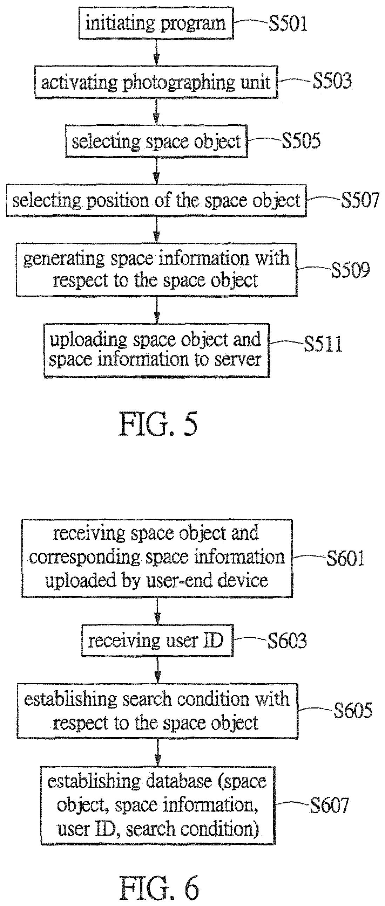

Fig. 5 next shows a flow chart describing the method for establishing the location-based space object in one embodiment of the present invention. The method also renders the process of searching for the space object and displaying the space object.

The application system of the present invention provides a software program to be downloaded by the user's handheld mobile device. The software program is started up to drive the mobile device to enter a data establishment mode or a search and display mode.

The user manipulates the mobile device to initiate the software program at step S501. The mobile device first enters the data establishment mode. The software program activates a photographing unit of the mobile device at step S503. The user can manipulate the mobile device to be directed toward the real scene where the space object is configured to be placed. In the meantime, at step S505, a user interface is provided for the user to select a space object, and the software program then receives a signal regarding the selection. At step S507, the touch-sensitive input method rendered by the mobile device allows the user to use a gesture to decide a position where the space object is overlapped onto the real scene. The software program receives the signal of the position where the mobile device selects for placing the space obj ect.

After the place for positioning the space object has been confirmed, such as in step S509, the software program receives the positioning information of the mobile device at this moment. The positioning information is such as the space information with respect to the space object and exemplarily indicative of the ground-position data generated by a GPS, and the space-angle data generated by a gyroscope of the mobile device. An image processing sequence is incorporated to convert the image of the real scene associated with the space object into a color block data and a line data. The color block data and the line data can be regarded as a reference for positioning the space object. At last, such as in step S511, the space information with respect to the space object and the data of the space object itself are transmitted to the server.

Furthermore, in one embodiment, the application system can acquire the user's identification (user ID) and search criteria associated with the specific space object in addition to obtaining the ground-position data, the space-angle data, and the image information of the real scene from the mobile device. It is noted that searching criteria includes a time range, a viewable range, and a user range.

Reference is next made to Fig. 6 describing a flow chart of establishing a database of the application system.

At step S601, the server receives the space object and its corresponding space information uploaded by the user. After that, at step S603, the server also receives the user identification from the user. At step S605, the server renders the searching criteria based on the user's requirement. One of the searching criteria is for the above-mentioned viewable range to be configurable based on the information relating the location of the real scene and the location where the mobile device creates the space object. Another searching criterion is such as a time limit allowing the user to view the space object. One more searching criterion is the user range for specifying a range allowing the user to see the space object, and the criterion can be decided by the user, or configured by the application system.

At step S607, a database for providing the search service is established. The database is used to record the space object, the space object's corresponding space information, the user ID and/or the searching criteria.

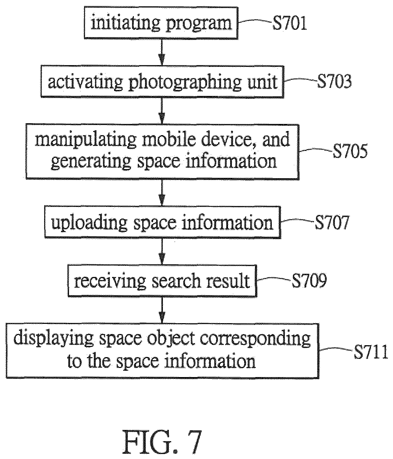

When the mobile device is under a search and display mode, reference is made to Fig. 7, and the location-based space object is displayed on the mobile device.

In the beginning of the process, as step S701, the user operates a mobile device to initiate a software program, at step S703. A photographing unit of the mobile device is activated to capture an image of a real scene, and the software program receives a signal of taking a picture of the real scene. At step S705, the software program continuously receives the positioning information generated by the positioning circuit of the mobile device. The software program therefore generates a ground-position data, a space-angle data, and/or the image information such as a color block data and a line data of the captured real scene. The space information is then uploaded to a server, at step S707.

The server has a search database. An operation procedure of the server is performed to compare the space information uploaded from the mobile device and/or using searching criteria with the search database. Besides the ground-position data and the space-angle data, the server also utilizes the color block data and/or the line data to search the space object. A search result corresponding to the space information is produced, at step S709, and transmitted to the mobile device. The space object has an ID, by which the space object can be obtained from a space object database. At step S711, the space object is downloaded to the mobile device, and displayed thereon.

In one embodiment, the application system provides a reminding service for informing the user of any space object that exists nearby. While this reminding service is activated, under the search and display mode, the user can be reminded when he moves into a viewable range of at least one space object since the system compares the positioning information of the mobile device with the search database. For example, the server issues a notification to the mobile device that reminds the user by a sound, a text, or a vibration signal. The user can operate the mobile device to search the space object around the user. It is also noted that the application system can filter the search result by the user's correlative information and preference.

It is worth noting that, in accordance with the present invention, the database in the cloud-based server records the space information with respect to the space object and/or its corresponding searching criteria. The space information is in a form of digital data stored in the database, for example the image information can be expressed by the digital form of the color blocks and the lines. The digital form of the information is convenient for the computer sequence to conduct a comparison for achieving the purpose of instant searching and immediate response. However, even though the system utilizes the blocks and lines to identify the real scene, the system can still directly recognize the scene through an image recognition method.

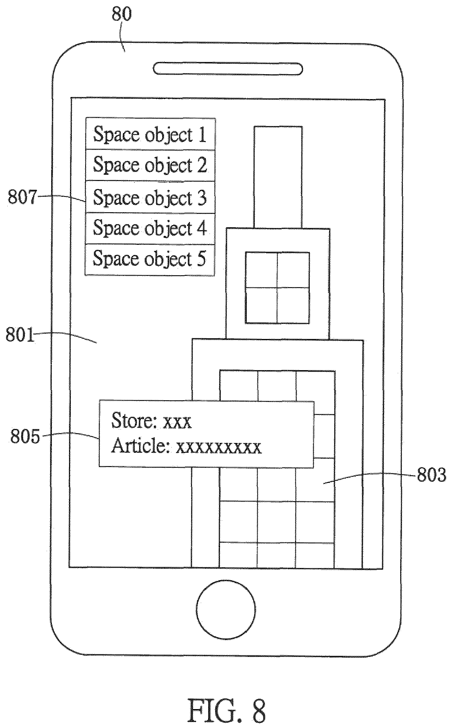

Fig. 8 schematically shows a GUI to display the multiple items in a search result.

A mobile device 80 is shown. A graphic user interface 801 is initiated using a software program being executed in the mobile device 80. A real scene 803 acting as a video displayed on a display is continuously captured by the mobile device 80. In the meantime, the software program acquires the ground-position data and the space-angle data with respect to the instant state of the mobile device 80. The software program can also acquire the image information of the real scene at the instant. This information forms the space information to be uploaded to a server. In the server, a comparison using the database is performed. One or more space objects with respect to the real scene are found and a final search result will be obtained and transmitted to the mobile device 80 through a searching criteria. The shown space object 805 is one of the items in the search result.

If the search result includes multiple items, as shown in the schematic diagram, a graphic user interface 801 provides a sidebar to show a search result option 807 that allows the user to select the one of interest. In the exemplary example, the search result option 807 shows the sorted space object 1, space object 2, space object 3, space object 4, and space object 5. The sorting criteria of the list in the search result can be based on the user's friend circle, preference, or correlation.

The way to display the space objects according to the search result may not be limited to the above embodiment. A graphic user interface allowing the user to switch the space objects (1, 2, 3, 4, 5, and 805) using his left-right sliding gesture may be provided. Further, the graphic user interface may adopt an overlapping approach to show the multiple space objects according to the search result, and allow the user to switch the space objects through a touch-sensitive display. Further, every space object may act as a hyperlink button that allows the user to click for getting more information. Still further, another icon may be included in the interface for the user to interact with and link to another information page.

Thus, in accordance with the above disclosure of the present invention, in the system for creating a location-based space object and displaying the space object, establishment of a searchable database is based on a space object uploaded by a plurality of users at the same or different real scenes. The searchable criteria include the positioning information such as the ground-position data and the space-angle data, and the image information of the real scene. The server serves the user who searches for the space object by his mobile device's positioning information to search the space objects recorded in the database. The system embodies a space object search engine for the users to search and display the space object using his mobile device.

It is intended that the specification and depicted embodiment be considered exemplary only, with a true scope of the invention being determined by the broad meaning of the following claims.

## Claims

1. A method for creating a location-based space object (103), comprising:
under a data establishment mode of a mobile device (400), receiving a signal of selecting a space object (103), wherein the space object (103) is any type or any combination of a text, a picture, a video, and a sound;
receiving a signal of location of the space object (103) associated to a real scene, and generating space information with respect to the space object (103); and
uploading data of the space object (103) and the space information with respect to the space object (103) to a server (41) for establishing a database provided for searching for the space object (103).

2. The method as recited in claim 1, wherein the space information with respect to the space object (103) includes a ground-position data and a space-angle data related to the mobile device (400) and an image data of the real scene.

3. The method as recited in claim 2, wherein the ground-position data is generated by a ground-positioning unit (403) in the mobile device (400) and the space-angle data is generated by a space-positioning unit (404) in the mobile device (400) when the mobile device (400) is in operation.

4. The method as recited in claim 2, wherein the image data of the real scene includes a color block data and a line data with respect to the space object (103).

5. The method as recited in claim 1, wherein, in the step of uploading the data of the space object (103), a searching criteria with respect to the space object (103) is set, and the searching criteria indicates any one or any combination of a time limit, a viewable range and a user range.

6. A method for displaying a location-based space object (103) that is any type or any combination of a text, a picture, a video, and a sound, comprising:
under a search and display mode, receiving a signal of a mobile device (400) acquiring an image of a real scene;
the mobile device (400) generating a space information associated to the real scene;
uploading the space information to a server (41); and
receiving a search result with respect to the space information from the server (41);
wherein, the server (41) has a database that is used to record a plurality of space objects (103) and space information with respect to the space objects (103) uploaded by multiple users using their mobile devices (400);
wherein, under the search and display mode, when the server (41) receives the space information uploaded from the mobile device (400), an operation procedure is initiated to conduct a comparison against the database so as to obtain the search result with respect to the space information.

7. The method as recited in claim 6, wherein the space information associated to the real scene includes a ground-position data and a space-angle data corresponding to the mobile device (400), and image information of the real scene.

8. The method as recited in claim 7, wherein the ground-position data is generated by a ground-positioning unit (403) of the mobile device (400) and the space-angle data is generated by a space-positioning unit (404) of the mobile device (400) which is in operation.

9. The method as recited in claim 8, wherein, after the server (41) receives the space information, the search result is generated when the server (41) compares the ground-position data and space-angle data using the database and based on a searching criteria.

10. The method as recited in claim 8, wherein the image information includes a color block data and a line data of the real scene associated to the space object (103).

11. The method as recited in claim 10, wherein, after the server (41) receives the space information, the search result is generated when the server (41) compares the ground-position data and space-angle data against the database, and further compares the color block data and/or the line data against the database based on a searching criteria; wherein the searching criteria indicates any one or any combination of a time limit, a viewable range and a user range.

12. An application system, comprising:
a server (41) with a database;
a non-transitory computer-readable medium recording an instruction set of a mobile device (400), wherein the instruction set executable by a processor of the mobile device (400) is to create and search for a location-based space object (103) that is any type or any combination of a text, a picture, a video, and a sound, and the instruction set includes:
instruction for acquiring an image of a real scene and being displayed by the mobile device (400);
instruction for processing a space object (103) in the mobile device (400) associated to the real scene and forming data of the space object (103) transmitted to the server (41) in the mobile device (400);
instruction for acquiring positioning information generated by a ground-positioning unit (403) and a space-positioning unit (404) of the mobile device (400);
instruction for processing the image of the real scene so as to generate image information of the real scene associated to the space object (103);
instruction for acquiring the positioning information and image information generated by the mobile device (400) under a search and display mode, and receiving a search result after the positioning information and the image information are transmitted to the server (41);
instruction for transmitting and receiving signals when a connection between the mobile device (400) and the server (41) has been established; and
instruction for displaying the space object (103) according to the search result.

13. The system as recited in claim 12, wherein the database is separated to a space object database (45) recording data of the space object (103) and a search database (43) recording space information of every space object (103) and searching criteria with respect to every space object (103).

14. The system as recited in claim 12, wherein the image information includes a color block data and a line data of the real scene for searching the space object (103).

15. The system as recited in claim 12, wherein the information related to the space object (103) uploaded to the server (41) includes searching criteria indicative of any one or any combination of a time limit, a viewable range and a user range.
